# EUROPÄISCHE PATENTSCHRIFT

(11) **EP 1 707 090 B1**
(45) Veröffentlichungstag und Bekanntmachung des Hinweises auf die Patenterteilung: **01.07.2009**
(21) Anmeldenummer: 06405011.5
(22) Anmeldetag: 13.01.2006
(51) Int. Cl.: A47J 31/44

(54) **Vorrichtung zur Erzeugung von Milchschaum und/oder zum Erhitzen von Milch**
Apparatus for the production of milk foam and/or for heating milk
Appareil pour la production du lait moussé et/ou pour chauffer du lait

(30) Priorität: 29.03.2005 CH 5342005
(43) Veröffentlichungstag der Anmeldung: 04.10.2006
(73) Patentinhaber: Cafina AG, 5502 Hunzenschwil (CH)
(72) Erfinder: Schödler, Claudio, 5600 Lenzburg (CH)
(74) Vertreter: Rottmann, Maximilian

(56) Entgegenhaltungen:
- EP-A- 1 312 292
- WO-A-02/21983

## Beschreibung

Die Erfindung betrifft eine gemäss dem Oberbegriff des Anspruchs 1 ausgebildete Vorrichtung zur Erzeugung von Milchschaum und/oder zum Erhitzen von Milch.

Derartige Vorrichtungen kommen insbesondere in oder zusammen mit Espressokaffeemaschinen zum Einsatz. Dabei wird der Milchschaum in erster Linie für die Herstellung von Cappuccino verwendet, während die erhitzte Milch sowohl für die Zubereitung von Milchkaffee wie auch von heissen Milchgetränken genutzt werden kann.

Zur Erzeugung von Milchschaum ist eine Vielzahl sogenannter Emulgiereinrichtungen bekannt. Diese verfügen im allgemeinen über einen Dampfzufuhrkanal, der in eine Saugkammer mündet. Diese Saugkammer ist mit einem Milchzufuhrkanal und einem Luftzufuhrkanal verbunden. Durch den Dampfstrom wird in der Saugkammer ein Unterdruck erzeugt, welcher bewirkt, dass Milch über den Milchzufuhrkanal und Luft über den Luftzufuhrkanal in die Saugkammer gesaugt werden. Dieses Dampf-Luft-Milchgemisch wird in einer nachfolgenden Emulgierkammer in eine turbulente Strömung versetzt, so dass eine heisse Emulsion aus Milch und Luft entsteht. Derartige Emulgiereinrichtungen sind beispielsweise aus der EP 0 195 750 sowie der EP 0 755 767 bekannt.

Aus der EP 1 312 292 A1 ist eine Anordnung zur Erzeugung von Milchschaum und zum Erhitzen von Milch bekannt. Die Anordnung ist mit einem Dampferzeuger, einem Milchgefäss und einem Mischelement versehen. Das Mischelement ist mit zwei Dampfeinlasskanälen versehen, wobei der eine davon vor einem Luftzufuhrkanal und der andere danach in einen Hauptkanal mündet. Unterhalb der beiden Dampfeinlasskanäle mündet ein Milchzufuhrkanal in den Hauptkanal. Durch das Vorsehen von zwei Dampfeinlasskanälen eignet sich die Anordnung neben dem Aufschäumen von Milch insbesondere auch für das kontrollierte Erhitzen von Milch.

Ein grundsätzliches Problem solcher Emulgiereinrichtungen besteht darin, dass sie relativ schnell verschmutzen. Daher sollte zumindest das Mischelement bei solchen Emulgiereinrichtung regelmässig gereinigt werden. Das Reinigen kann entweder durch Herausnahme des Mischelements und anschliessende Reinigung, beispielsweise in einer Spülmaschine, erfolgen. Aber auch das Reinigen mittels eines Spülprogramms, bei dem das Mischelement nicht aus der Maschine entfernt werden muss, ist bekannt. Da sich mit einer konventionellen Reinigung wie beispielsweise einem Spülprogramm jedoch nicht alle Ablagerungen im Mischelement entfernen lassen, wäre es trotzdem wünschenswert, wenn das Mischelement unabhängig von allfälligen bereits maschinenseitig getroffenen Reinigungsmassnahmen vom Benutzer ausgetauscht werden könnte. Dies ist insbesondere daher wünschenswert, da sich in den milchführenden Leitungen und Kanälen des Mischelements mit der Zeit ein Kaseinat ansetzt, welches weder mittels heissem Wasser noch mit herkömmlichen, lebensmittelverträglichen Reinigungsmitteln entfernt werden kann **(stimmt das so?).** Das Entnehmen des Mischelements gestaltet sich jedoch bis anhin relativ aufwändig, da vor dem Herausnehmen des Mischelements mehrere Leitungen davon getrennt bzw. nach dem Einsetzen korrekt damit verbunden werden müssen.

Die Erfindung zielt daher darauf ab, eine Vorrichtung zur Erzeugung von Milchschaum und/oder zum Erhitzen von Milch derart zu gestalten, dass zumindest das Mischelement schnell und einfach entfernt werden kann, wobei auch das Einsetzen eines neuen oder gereinigten Mischelements möglichst einfach durchführbar sein soll und wobei ein falsches Anschliessen der mit dem Mischelement zu verbindenden Leitungen weitestgehend vermieden werden soll.

Hierzu wird nach der Erfindung eine Vorrichtung gemäss dem Anspruch 1 bereitgestellt.

Als Mischelement wird im vorliegenden Fall das Herzstück der Vorrichtung, in welchem Dampf, Milch und ggf. Luft zusammengeführt werden, bezeichnet. Indem die Vorrichtung eine Kupplungsanordnung umfasst, welche mit mehreren Kupplungselementen versehen ist, an denen die genannten Leitungen angeschlossen sind und die mit dem jeweiligen Kanal des Mischelements verbindbar sind und die Kupplungselemente entlang einer vorgegebenen Wegstrecke verschiebbar angeordnet sind, wird die grundsätzliche Voraussetzung geschaffen, damit das Mischelement schnell und einfach entfernt und danach auch wieder einfach eingesetzt und korrekt angeschlossen werden kann.

Bevorzugte Ausführungsbeispiele der Anordnung sind in den abhängigen Ansprüchen 2 bis 11 umschrieben.

Nachfolgend wird ein bevorzugtes Ausführungsbeispiel der Erfindung anhand von Zeichnungen näher erläutert. Dabei zeigt:
Fig. 1 eine Kupplungsanordnung in einer Draufsicht;
Fig. 2 ein Mischelement in einer Draufsicht;
Fig. 3 die Kupplungsanordnung mitsamt dem daran angeordneten Mischelement im nicht gekuppelten Zustand;
Fig. 4 einen Längsschnitt durch die Kupplungsanordnung sowie das Mischelement im nicht gekuppelten Zustand;
Fig. 5 einen Längsschnitt durch die Kupplungsanordnung sowie das Mischelement im gekuppelten Zustand;
Fig. 6 einen Querschnitt durch die Kupplungsanordnung, das Mischelement sowie ein Anschlusselement, und
Fig. 7 eine Draufsicht auf ein Abdeckblech des Abdeckelements.

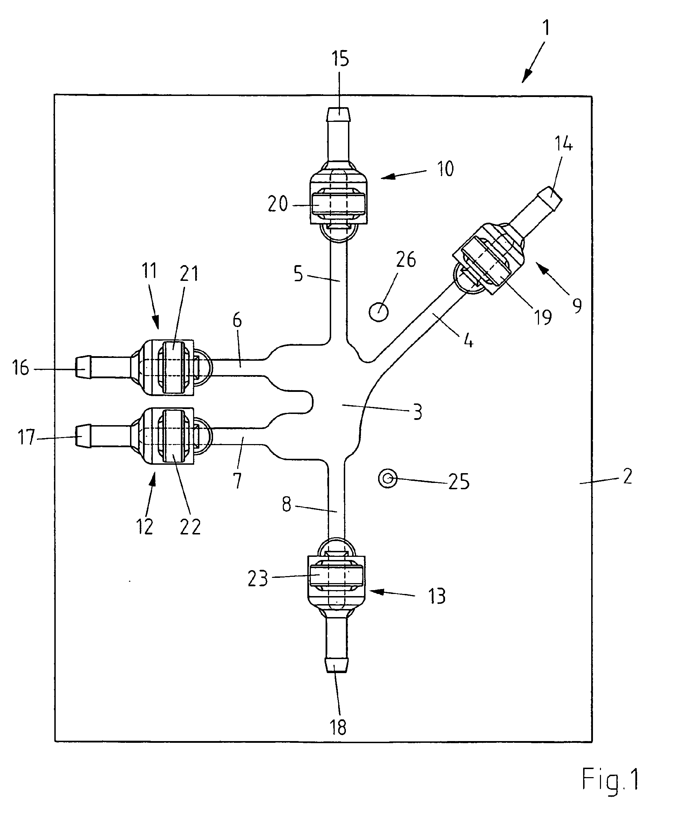

Fig. 1 zeigt eine Kupplungsanordnung 1 in einer Draufsicht. Die Kupplungsanordnung 1 umfasst eine Grundplatte 2, die mit einer zentralen Aussparung 3 versehen ist, von der fünf in Form von Schlitzen 4, 5, 6, 7, 8 ausgebildete Ausnehmungen ausgehen. In diesen Schlitzen 4, 5, 6, 7, 8 sind fünf Kupplungselemente 9, 10, 11, 12, 13 fixiert, wobei das jeweilige Kupplungselement 9, 10, 11, 12, 13 entlang des zugehörigen Schlitzes 4, 5, 6, 7, 8 verschiebbar angeordnet ist. Jedes dieser Kupplungselemente 9, 10, 11, 12, 13 ist auf der Rückseite mit einem Anschlussstutzen 14, 15, 16, 17, 18 zum Anschliessen eines flexiblen Schlauchs versehen, während in die Vorderseite jeweils eine Ausnehmung eingelassen ist, so dass ein hohlzylindrischer Vorderteil entsteht. Im weiteren weist jedes Kupplungselement 9, 10, 11, 12, 13 eine sich in rechtem Winkel zu der Längsachse erstreckende Erhebung in Form eines Schiebers 19, 20, 21, 22, 23 auf, mittels welchem das jeweilige Kupplungselement 9, 10, 11, 12, 13 manuell verschoben werden kann. In die dem Schieber 19, 20 gegenüberliegenden Unterseite ist eine ringförmige Führungsnut eingelassen, in welche sich die Grundplatte 2 mit den an den jeweiligen Schlitz 4, 5, 6, 7, 8 angrenzenden Bereichen erstrecken kann und welche der Führung des jeweiligen Kupplungselements 9, 10, 11, 12, 13 entlang des jeweiligen Schlitzes 4, 5, 6, 7, 8 dienen. Auf der Grundplatte 2 sind zwei Nocken 25, 26 angeordnet, welche dem lagegerechten Positionieren eines Mischelements dienen. Um sicherzustellen, dass die Kupplungselemente 9, 10, 11, 12, 13 in der hier gezeigten Ruhestellung verharren und sich nicht selbständig und ungewollt gegen die zentrale Aussparung 3 hin verschieben, können im Endbereich des jeweiligen Schlitzes 4, 5, 6, 7, 8 Rastmittel vorgesehen werden. Anstelle der gezeigten Schlitze 4, 5, 6, 7, 8 könnten beispielsweise auch Erhebungen zum Führen der Kupplungselemente 9, 10, 11, 12, 13 vorgesehen werden.

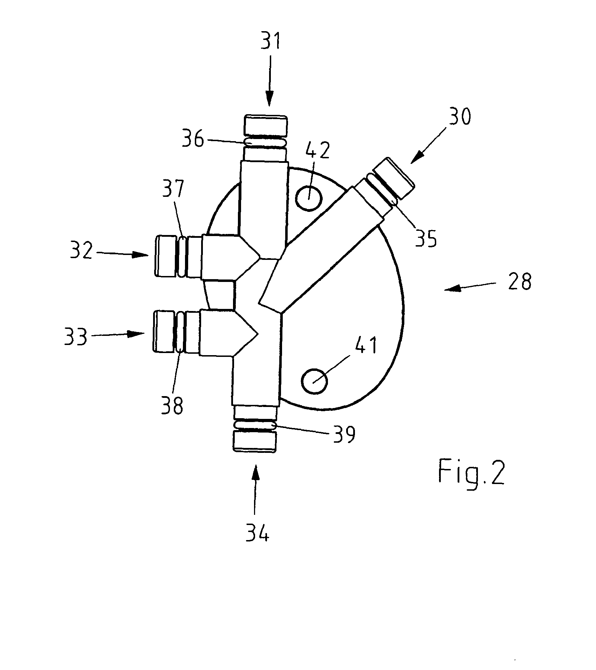

Die Fig. 2 zeigt das Mischelement 28 in einer Draufsicht. Da ein solches Mischelement grundsätzlich bekannt ist, beispielsweise aus der EP 1 312 292 A1, wird nachfolgend nur auf einige im Zusammenhang mit der Erfindung relevanten Merkmale des Mischelements 28 eingegangen. Obwohl hier immer von einem Mischelement gesprochen wird, eignet sich das dargestellte Mischelement nicht nur zum Aufschäumen von Milch, sondern es kann damit auch Milch erhitzt werden. Das Mischelement 28 ist mit insgesamt fünf hohlzylindrischen Fortsätzen 30, 31, 32, 33, 34 versehen. Dabei sind zwei Fortsätze 30, 31 zum Verbinden mit einer Dampfzufuhrleitung vorgesehen, während ein dritter Fortsatz 32 zum Verbinden mit einer Luftzufuhrleitung und ein vierter Fortsatz 33 zum Verbinden mit einer Milchleitung vorgesehen ist. Der fünfte Fortsatz 34 dient dem Verbinden mit einer Abgabeleitung, über welche die aufgeschäumte oder erhitzte Milch abgeführt werden kann. Sämtliche Fortsätze 30, 31, 32, 33, 34 sind auf der Aussenseite mit einem O-Ring 35, 36, 37, 38, 39 versehen, der dem Abdichten des jeweiligen Fortsatzes 30, 31, 32, 33, 34 gegenüber dem Kupplungselement dient. Das Mischelement 28 ist mit zwei Bohrungen 41, 42 versehen, mittels welchen es lagerichtig an den an der Grundplatte angeordneten Nocken positioniert werden kann.

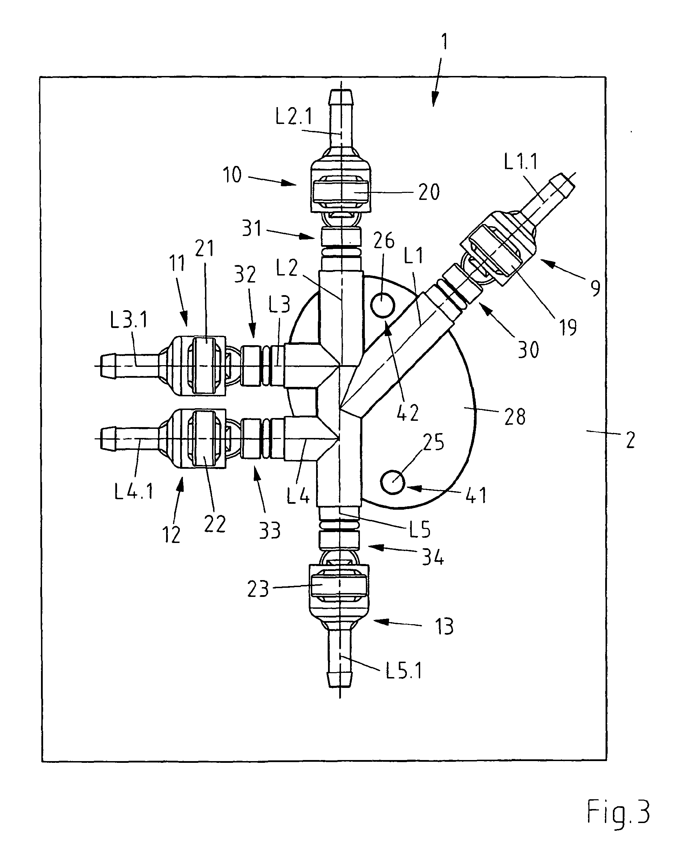

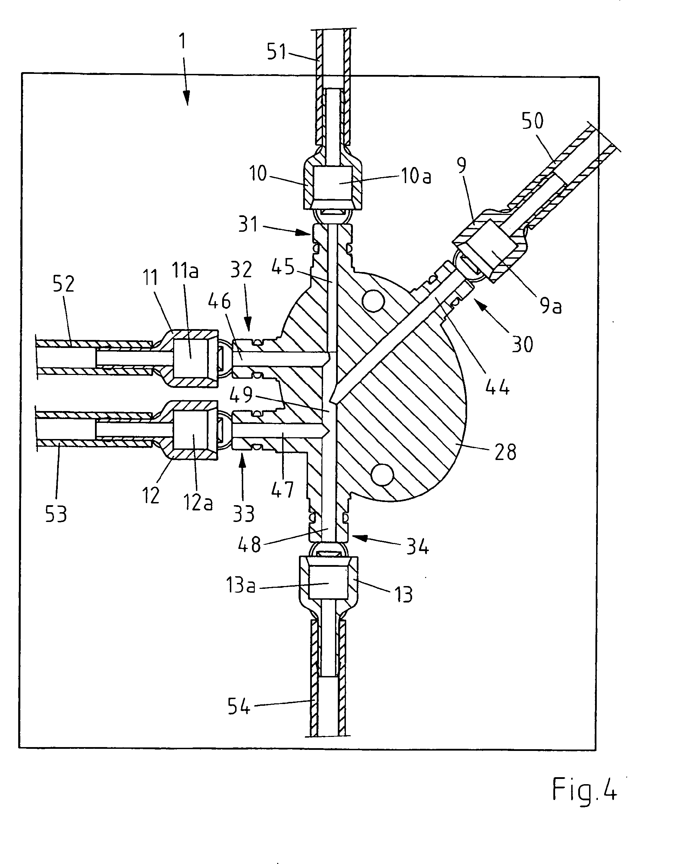

Fig. 3 zeigt das auf der Grundplatte 2 der Kupplungsanordnung 1 angeordnete Mischelement 28 im nicht gekuppelten Zustand. Das Mischelement 28 ist dabei derart auf der Grundplatte 2 angeordnet, dass die beiden Nocken 25, 26 der Grundplatte 2 in die jeweilige Bohrung 41, 41 des Mischelements 28 eingreifen und dieses gegenüber der Grundplatte 2 lagegerecht positionieren. Die verschiebbar auf der Grundplatte 2 angeordneten Kupplungselemente 9, 10, 11, 12, 13 korrespondieren dabei mit der Lage des zugeordneten Fortsatzes 30, 31, 32, 33, 34 des Mischelements 28, so dass eine falsche Verbindung zwischen den Fortsätzen 30, 31, 32, 33, 34 und den zugehörigen Kupplungselementen 9, 10, 11, 12, 13 ausgeschlossen ist. Die als Nocken 25, 26 ausgebildeten Positionierelemente der Grundplatte 2 sind vorzugsweise derart auf die Bohrungen 41, 42 des Mischelements 28 abgestimmt, dass das Mischelement 28 nicht um 180° verdreht auf der Grundplatte 2 angeordnet werden kann, zumal bei einem um 180° verdrehten Einsetzen des Mischelements 28 zumindest drei Kupplungselemente 9, 11, 12 keinem Fortsatz des Mischelements 28 zugeordnet wären. Bei korrekt angeordnetem Mischelement 28 fällt die Längsachse L1.1, L2.1, L3.1, L4.1, L5.1 des jeweiligen Kupplungselements 9, 10, 11, 12, 13 mit der Längsachse des zugeordneten Kanals 44, 45, 46, 47, 48 (Fig. 4) wie auch mit der Längsachse L1, L2, L3, L4, L5 des zugeordneten Fortsatzes 30, 31, 32, 33, 34 zusammen. Die Längsachsen des jeweiligen Führungsorgans -Schlitze 4, 5, 6, 7, 8 in Fig.1- verlaufen dagegen parallel zu der Längsachse des zugeordneten Kanals bzw. Fortsatzes 30, 31, 32, 33, 34. Um ein Kupplungselement 9, 10, 11, 12, 13 mit dem zugehörigen Fortsatz 30, 31, 32, 33, 34 zu verbinden, wird das jeweilige Kupplungselement 9, 10, 11, 12, 13 mittels des Schiebers 19, 20, 21, 22, 23 manuell auf den zugeordneten Fortsatz 30, 31, 32, 33, 34 aufgeschoben, und zwar soweit, bis sich das jeweilige Kupplungselement 9, 10, 11, 12, 13 mit seiner Stirnseite an einem ringförmigen Anschlag auf der Rückseite des Fortsatzes 30, 31, 32, 33, 34 anlegt.

Fig. 4 zeigt einen Längsschnitt durch die Kupplungsanordnung 1 sowie das Mischelement 28 im nicht gekuppelten Zustand. Aus dieser Darstellung sind ein mit dem ersten Fortsatz 30 verbundener erster Dampfzufuhrkanal 44, ein mit dem zweiten Fortsatz 31 verbundener zweiter Dampfzufuhrkanal 45, ein mit dem dritten Fortsatz 32 verbundener Luftzufuhrkanal 46, ein mit dem vierten Fortsatz 33 verbundener Milchzufuhrkanal 47 sowie ein mit dem fünften Fortsatz 34 verbundener Abgabekanal 48 ersichtlich. Sämtliche der genannten Kanäle 44, 45, 46, 47, 48 sind mit einem Hauptkanal 49 verbunden. Aus dieser Darstellung sind zudem fünf schematisch dargestellte Schläuche 50, 51, 52, 53, 54 ersichtlich, welche auf den jeweiligen Anschlussstutzen eines Kupplungselements 9, 10, 11, 12, 13 aufgesteckt sind. Der erste Dampfschlauch 50 ist wie auch der zweite Dampfschlauch 51 mit einem Dampferzeuger verbunden, während der Luftschlauch 52 zu der Umgebungsluft hin offen ist. Der Milchschlauch 53 ist mit einer Milchquelle bzw. einer zum zwangsweisen Zuführen der Milch vorgesehenen Pumpe verbunden, während der Abgabeschlauch 54 zu einer Abgabeöffnung führt. Vorzugsweise sind sämtlich Schläuche dauerelastisch ausgebildet. Obwohl in diesem Beispiel ein Kupplungselement 21 zum Anschliessen an den mit dem Luftkanal 46 verbundenen Fortsatz 32 vorgesehen ist, kann auf dieses Kupplungselement 21 ggf. verzichtet werden, da über die Leitung 52 kein eigentliches Medium zugeführt werden muss, sondern diese zu der Umgebungsluft hin offen ist. Im weiteren ist ersichtlich, dass jedes Kupplungselement 9, 10, 11, 12, 13 auf der Vorderseite mit einer runden Ausnehmung 9a, 10a, 11 a, 12a, 13a versehen ist, so dass ein hohlzylindrischer Vorderteil gebildet wird, dessen Innenkontur mit der Aussenkontur des zugehörigen Fortsatzes 30, 31, 32, 33, 34 korrespondiert.

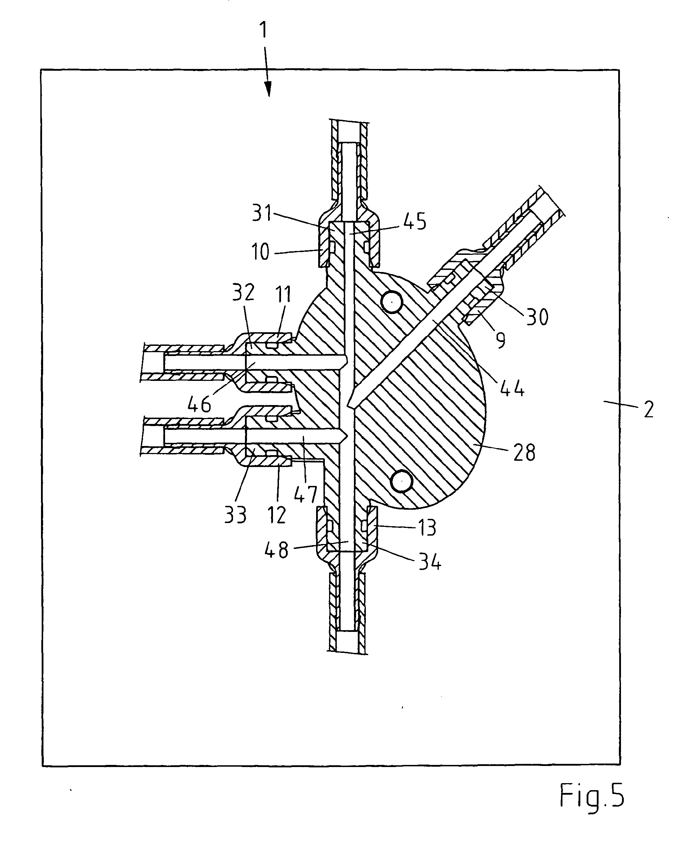

Die Fig. 5 zeigt einen Längsschnitt durch die Kupplungsanordnung 1 sowie das Mischelement 28 im gekuppelten Zustand. In diesem gekuppelten Zustand sind die Kupplungselemente 9, 10, 11, 12, 13 auf den jeweiligen Fortsatz 30, 31, 32, 33, 34 aufgeschoben, wodurch einerseits eine dichte Verbindung zwischen dem jeweiligen Kupplungselement 9, 10, 11, 12, 13 bzw. der jeweiligen Leitung 44, 45, 46, 47, 48 und dem zugehörigen Fortsatz 30, 31, 32, 33, 34 hergestellt ist. Andererseits ist das Mischelement 28 dadurch an der Grundplatte 2 fixiert und arretiert.

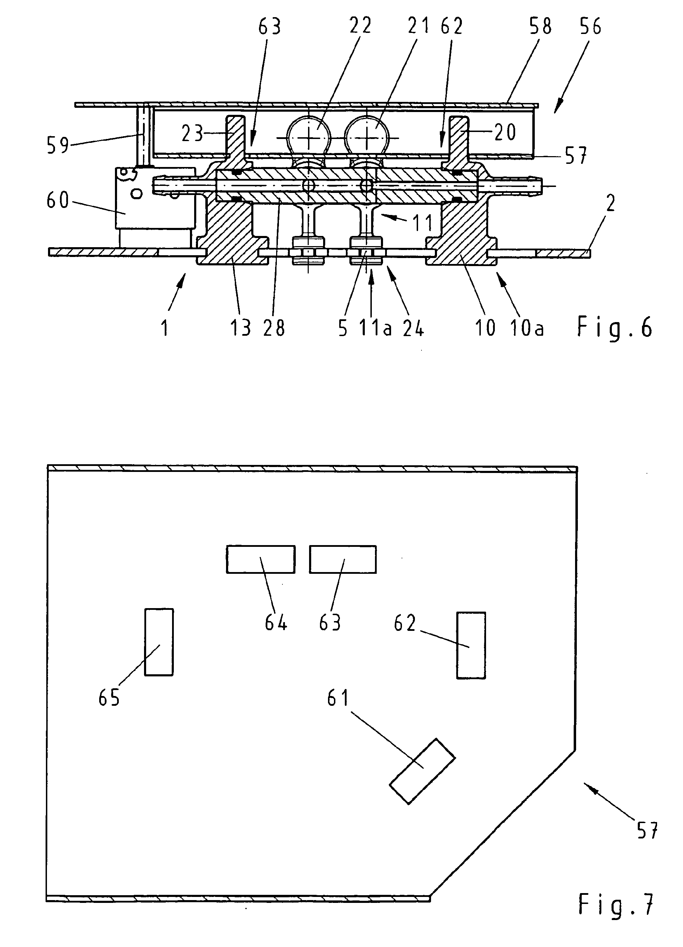

Fig. 6 zeigt einen Querschnitt durch Kupplungsanordnung 1 sowie den Milchschäumer 28 im gekuppelten Zustand. Aus dieser Darstellung ist ersichtlich, dass in die einem Schieber 21 gegenüberliegenden Unterseite 11 a des jeweiligen Kupplungselements 11 eine ringförmige Führungsnut 24 eingelassen ist, in welche sich die Grundplatte 2 mit den an den jeweiligen Schlitz 5 angrenzenden Bereichen erstrecken kann, und welche der Führung des jeweiligen Kupplungselements 11 entlang des jeweiligen Schlitzes 5 dient. Im weiteren ist ein Abdeckelement 56 ersichtlich, welches mit einem unteren Abdeckblech 57, einem oberen Abschlussblech 58 sowie einem stiftförmigen Fortsatz 59 versehen ist. Schliesslich ist ein elektrischer Schalter 60 ersichtlich, der auf der Grundplatte 2 angeordnet ist. In das untere Abdeckblech 57 sind Schlitze 62, 63 eingelassen, durch welche sich der Schieber 20, 23 des jeweiligen Kupplungselements 10, 13 erstrecken kann, wenn die Lage desselben mit dem entsprechenden Schlitz 62, 63 übereinstimmt. Die Schlitze 62, 63 sind derart dimensioniert und angeordnet, dass sich der jeweilige Schieber 20, 23 nur dann durch den jeweiligen Schlitz 62, 63 hindurch erstrecken kann, wenn das sich zugehörige Kupplungselement 10, 13 in dem verriegelten Endzustand befindet. Obwohl aus dieser Darstellung nur zwei Schlitze 62, 63 ersichtlich sind, sind für sämtliche fünf Schieber solche Schlitze in das untere Abdeckblech 57 eingelassen. Dadurch wird sichergestellt, dass das Abdeckelement 56 nur dann an der Kupplungsanordnung 1 angebracht werden kann, wenn sich sämtliche Kupplungselemente 9, 10, 11, 12, 13 im verriegelten bzw. gekuppelten Zustand befinden. Das Abdeckelement 56 kann beispielsweise mittels Schrauben (nicht dargestellt) an der Grundplatte 2 der Kupplungsanordnung 1 befestigt werden. Dieser Endzustand wird mittels des Schalters 60 überwacht, der von dem stiftförmigen Fortsatz 59 dann betätigt wird, wenn das Abdeckelement 56 korrekt an der Kupplungsanordnung 1 angebracht ist. Der Schalter 60 ist mit der Maschinensteuerung so verbunden, dass die Vorrichtung nur dann aktiviert werden kann, wenn das Abdeckelement 56 korrekt an der Kupplungsanordnung 1 angebracht ist.

Fig. 7 zeigt eine Draufsicht auf das Abdeckblech 57. Aus dieser Darstellung sind sämtliche fünf in das Abdeckblech 57 eingelassenen Schlitze 61, 62, 63, 64, 65 ersichtlich, welche mit der Lage der Schieber korrespondieren, wenn diese sich im gekuppelten Zustand befinden.

Eine derartige Vorrichtung eignet sich insbesondere zur Verwendung an, mit oder in einer Espressokaffeemaschine.

## Patentansprüche

1. Vorrichtung zur Erzeugung von Milchschaum und/oder zum Erhitzen von Milch, mit einem Mischelement (28), welch letzteres zumindest einen mit einer Dampfzufuhrleitung (51) verbindbaren Dampfeinlasskanal (45), einen mit einer Milchzufuhrleitung (53) verbindbaren Milcheinlasskanal (47), einen mit einer Abgabeleitung (54) verbindbaren Abgabekanal (48) sowie einen Lufteinlasskanal (46) aufweist, **dadurch gekennzeichnet, dass** die Vorrichtung eine Kupplungsanordnung (1) umfasst, welche mit mehreren Kupplungselementen (10, 12, 13) versehen ist, an denen die genannten Leitungen (51, 53, 54) angeschlossen sind und die mit dem jeweiligen Kanal (45, 47, 48) des Mischelements (28) verbindbar sind, wobei die Kupplungselemente (10, 12, 13) entlang einer vorgegebenen Wegstrecke verschiebbar angeordnet sind.

2. Vorrichtung nach Anspruch 1, **dadurch gekennzeichnet, dass** an der Kupplungsanordnung (1) Mittel (25, 26) zum lagegerechten Positionieren des Mischelements (28) angeordnet sind.

3. Vorrichtung nach einem der vorhergehenden Ansprüche, **dadurch gekennzeichnet, dass** die Kupplungsanordnung (1) mit länglichen Führungsorganen, insbesondere nuten- oder schlitzförmigen Ausnehmungen (5, 7, 8) oder Erhebungen versehen ist, welche der Führung des jeweiligen Kupplungselements (10, 12, 13) entlang der vorgegebenen Wegstrecke dienen.

4. Vorrichtung nach einem der vorhergehenden Ansprüche, **dadurch gekennzeichnet, dass** die Kupplungselemente (10, 12, 13) in Form einer Steckverbindung ausgebildet sind.

5. Vorrichtung nach Anspruch 4, **dadurch gekennzeichnet, dass** zumindest der Dampfeinlasskanal (45), der Milcheinlasskanal (47) und der Abgabekanal (48) des Mischelements (28) mit je einem hohlzylindrischen Fortsatz (31, 33, 34) verbunden sind und dass jedem Fortsatz (31, 33, 34) ein Kupplungselement (10, 12, 13) zugeordnet ist, wenn das Mischelement (28) lagegerecht an der Kupplungsanordnung (1) positioniert ist, wobei das jeweilige Kupplungselement (10, 12, 13) auf der dem Mischelement (28) zuzuwendenden Seite mit einer hohlzylindrischen Ausnehmung (10a, 12a, 13a) versehen ist, und wobei die Aussenkontur des jeweiligen Fortsatzes (31, 33, 34) mit der Innenkontur der hohlzylindrischen Ausnehmung (10a, 12a, 13a) des zugeordneten Kupplungselements (10, 12, 13) korrespondiert, so dass das jeweilige Kupplungselement (10, 12, 13) dicht mit dem zugeordneten Fortsatz (31, 33, 34) verbindbar ist.

6. Vorrichtung nach einem der vorhergehenden Ansprüche, **dadurch gekennzeichnet, dass** das Mischelement (28) derart an der Kupplungsanordnung (1) positioniert ist, dass die Längsachse (L2.1, L4.1, L5.1)) des jeweiligen Kupplungselements (10, 12, 13) mit der Längsachse (L2, L4, L5) des zugeordneten Kanals (45, 47, 48) zusammenfällt.

7. Vorrichtung nach Anspruch 2 und 3, **dadurch gekennzeichnet, dass** das Mischelement (28) derart an der Kupplungsanordnung (1) positioniert ist, dass jeweils die Längsachse des länglichen Führungsorgans (5, 7, 8) parallel zu der Längsachse des zugeordneten Kanals (45, 47, 48) verläuft.

8. Vorrichtung nach einem der vorhergehenden Ansprüche, **dadurch gekennzeichnet, dass** der jeweilige Fortsatz (31, 33, 34) auf der Aussenseite mit einem Dichtelement, insbesondere einem O-Ring (36, 38, 39), versehen ist.

9. Vorrichtung nach einem der vorhergehenden Ansprüche, **dadurch gekennzeichnet, dass** das jeweilige Kupplungselement (10, 12, 13) mit Erhebungen in Form von Schiebern (20, 22, 23) versehen ist, mittels welchen es manuell entlang der vorgegebenen Wegstrecke verschiebbar ist.

10. Vorrichtung nach einem der vorhergehenden Ansprüche, **dadurch gekennzeichnet, dass** die Vorrichtung ein Abdeckelement (56) umfasst, welches mit Ausnehmungen (62, 63, 65) versehen ist, die korrespondierend zu an dem jeweiligen Kupplungselement (10, 12, 13) angebrachten Erhebungen (20, 22, 23) angeordnet und ausgebildet sind, so dass die Erhebungen (20, 22, 23) in die Ausnehmungen (62, 63, 65) eingreifen können, wenn sich die Kupplungselemente (12, 12, 13) in der gekuppelten Endstellung befinden, und dass ein Schalter (60) vorgesehen ist, mittels welchem die korrekte Positionierung sämtlicher Kupplungselemente überwachbar ist.

11. Vorrichtung nach einem der vorhergehenden Ansprüche, **dadurch gekennzeichnet, dass** sie an, in oder zusammen mit einer Espressokaffeemaschine verwendet wird.

## Claims

1. A device for generating milk froth and/or for heating milk including a blender element (28), the latter comprising at least one steam inlet passageway (45) connectable to a steam feed conduit (51), a milk inlet passageway (47) connectable to a milk feed conduit (53), a discharge passageway (48) connectable to a discharge conduit (54) as well as an air inlet passageway (46), **characterized in that** the device comprises a coupling assembly (1) provided with several coupling elements (10, 12, 13) to which the cited conduits (51, 53, 54) are connected and which are connectable with each passageway (45, 47, 48) of the blender element (28), the coupling elements (10, 12, 13) being arranged shiftable along a prescribed travel distance.

2. The device as set forth in claim 1, **characterized in that** arranged at the coupling assembly (1) are means (25, 26) for correctly positioning the blender element (28).

3. The device as set forth in any of the preceding claims, **characterized in that** the coupling assembly (1) is provided with elongated guide members, particularly groove or slot-type concavities (5, 7, 8) or convexities serving to guide each coupling element (10, 12, 13) along the prescribed travel distance.

4. The device as set forth in any of the preceding claims, **characterized in that** the coupling elements (10, 12, 13) are each configured in the form of a plug-in connector.

5. The device as set forth in claim 4, **characterized in that** at least the steam inlet passageway (45), the milk inlet passageway (47) and the discharge passageway (48) are each connected to a cylindrically hollow extension (31, 33, 34) and that each extension (31, 33, 34) is assigned a coupling assembly (1) when the blender element (28) is correctly positioned at the coupling assembly (1), each coupling element (10, 12, 13) is provided at the side to face the blender element (28) with a cylindrically hollow concavity (10a, 12a, 13a) and the outer contour of each extension (31, 33, 34) corresponds to the inner contour of the cylindrically hollow concavity (10a, 12a, 13a) of the assigned coupling element (10, 12, 13), so that each coupling element (10, 12, 13) is sealingly tight connectable to the assigned extension (31, 33, 34).

6. The device as set forth in any of the preceding claims, **characterized in that** the blender element (28) is positioned at the coupling assembly (1) such that the centerline (L2.1, L4.1, L5.1) of each coupling element (10, 12, 13) coincides with the centerline (L2, L4, L5) of the assigned passageway (45, 47, 48).

7. The device as set forth in claim 2 and 3, **characterized in that** the blender element (28) is positioned at the coupling assembly (1) such that the centerline of the elongated guide member (5, 7, 8) is located parallel to the the centerline of the assigned passageway (45, 47, 48).

8. The device as set forth in any of the preceding claims, **characterized in that** each extension (31, 33, 34) is provided at its outer side with a sealing element, particularly an O-ring (36, 38, 39).

9. The device as set forth in any of the preceding claims, **characterized in that** the coupling element (10, 12, 13) is each provided with convexities in the form of sliders (20, 22, 23) by means of which it can be manually shifted along the prescribed travel distance.

10. The device as set forth in any of the preceding claims, **characterized in that** the device comprises a cover element (56) provided with concavities (62, 63, 65) arranged to correspond with the convexities (20, 22, 23) formed on each coupling element (10, 12, 13) so that the convexities (20, 22, 23) can engage the concavities (62, 63, 65) when the coupling elements (10, 12, 13) are in the coupled final position and that a switch (60) is provided, by means of which the correct positioning of all coupling elements can be monitored.

11. The device as set forth in any of the preceding claims, **characterized in that** it is used in or together with an espresso coffee machine.

## Revendications

1. Appareil pour la production de lait moussé et/ou pour chauffer du lait avec un élément de mélange (28) qui présente au moins un canal d'admission de vapeur (45) pouvant être relié à une conduite d'amenée de vapeur (51), un canal d'admission de lait (47) pouvant être relié à une conduite d'amenée de lait (53), un canal de distribution (48) pouvant être relié à une conduite de distribution (54) ainsi qu'un canal d'admission d'air (46), **caractérisé en ce que** le dispositif comporte un ensemble d'accouplement (1) qui est pourvu de plusieurs éléments d'accouplement (10, 12, 13), auxquels sont raccordées les conduites (51, 53, 54) citées et qui peuvent être reliés au canal (45, 47, 48) respectif de l'élément de mélange (28), les éléments d'accouplement (10, 12, 13) étant disposés à coulissement le long d'une distance de parcours prescrite.

2. Appareil selon la revendication 1, **caractérisé en ce que** des moyens (25, 26) sont disposés pour le positionnement correct de l'élément de mélange (28) sur l'ensemble d'accouplement (1).

3. Appareil selon l'une quelconque des revendications précédentes, **caractérisé en ce que** l'ensemble d'accouplement (1) est pourvu d'organes de guidage oblongs, en particulier d'évidements (5, 7, 8) en forme de rainure ou de fente ou surélévations qui servent au guidage de l'élément d'accouplement (10, 12, 13) respectif le long de la distance de parcours prescrite.

4. Appareil selon l'une quelconque des revendications précédentes, **caractérisé en ce que** les éléments d'accouplement (10, 12, 13) sont réalisés en forme d'assemblage par emboîtement.

5. Appareil selon la revendication 4, **caractérisé en ce qu'**au moins le canal d'admission de vapeur (45), le canal d'admission de lait (47) et le canal de distribution (48) de l'élément de mélange (28) sont reliés à un prolongement (31, 33, 34) cylindrique creux et **en ce qu'**à chaque prolongement (31, 33, 34) est associé un élément d'accouplement (10, 12, 13) si l'élément de mélange (28) est positionné correctement sur l'ensemble d'accouplement (10, 12, 13), l'élément d'accouplement (10, 12, 13) respectif étant pourvu sur le côté à tourner vers l'élément de mélange (28) d'un évidement (10a, 12a, 13a) cylindrique creux, et le contour extérieur du prolongement (31, 33, 34) respectif correspondant au contour intérieur de l'évidement (10a, 12a, 13a) cylindrique creux de l'élément d'accouplement (10, 12, 13) associé de sorte que l'élément d'accouplement (10, 12, 13) respectif puisse être relié de manière étanche au prolongement (31, 33, 34) associé.

6. Appareil selon l'une quelconque des revendications précédentes, **caractérisé en ce que** l'élément de mélange (28) est positionné sur l'ensemble d'accouplement (1) de sorte que l'axe longitudinal (L2.1, L4.1, L5.1) de l'élément d'accouplement (10, 12, 13) respectif coïncide avec l'axe longitudinal (L2, L4, L5) du canal associé (45, 47, 48).

7. Appareil selon la revendication 2 ou 3, **caractérisé en ce que** l'élément de mélange (28) est positionné sur l'ensemble d'accouplement (1) de sorte que respectivement l'axe longitudinal de l'organe de guidage (5, 7, 8) oblong s'étende parallèlement à l'axe longitudinal du canal (45, 47, 48) associé.

8. Appareil selon l'une quelconque des revendications précédentes, **caractérisé en ce que** le prolongement (31, 33, 34) respectif est pourvu sur le côté extérieur d'un élément étanche, en particulier d'un joint torique (36, 38, 39).

9. Appareil selon l'une quelconque des revendications précédentes, **caractérisé en ce que** l'élément d'accouplement (10, 12, 13) respectif est pourvu de surélévations en forme de poussoirs (20, 22, 23), au moyen desquels il peut être coulissé manuellement le long de la distance de parcours prescrite.

10. Appareil selon l'une quelconque des revendications précédentes, **caractérisé en ce que** l'appareil comporte un élément de recouvrement (56) qui est pourvu d'évidements (62, 63, 65) qui sont disposés et réalisés de manière correspondante aux surélévations (20, 22, 23) montées sur l'élément d'accouplement (10, 12, 13) respectif de sorte que les surélévations (20, 22, 23) puissent s'engager dans les évidements (62, 63, 65) si les éléments d'accouplement (12, 12, 13) se trouvent dans la position finale couplée, et **en ce qu'**un commutateur (60) est prévu, au moyen duquel le positionnement correct de tous les éléments d'accouplement peut être surveillé.

11. Appareil selon l'une quelconque des revendications précédentes, **caractérisé en ce qu'**il est utilisé sur, dans ou conjointement avec une machine à expresso.
